# EUROPEAN PATENT APPLICATION

(11) **EP 0 660 316 A2**
(43) Date of publication of application: **28.06.1995**
(21) Application number: 94119793.1
(22) Date of filing: 15.12.1994
(51) Int. Cl.: G11B 11/10

(54) **Magneto-optical recording medium and method for the preparation thereof**

(30) Priority: 27.12.1993 JP 331362/93
(71) Applicant: SHIN-ETSU CHEMICAL CO., LTD., Chiyoda-ku Tokyo (JP)
(72) Inventor: Fukushima, Noriyasu, c/o Shin-Etsu Chemical Co Ltd, Annaka-shi, Gunma-ken (JP); Shimizu, Yoshiaki, c/o Shin-Etsu Chemical Co., Ltd, Annaka-shi, Gunma-ken (JP); Yamamura, Waichi, c/o Shin-Etsu Chemical Co., Ltd., Annaka-shi, Gunma-ken (JP); Saitoo, Makoto, c/o Shin-Etsu Chemical Co., Ltd., Annaka-shi, Gunma-ken (JP); Yoshikawa, Hiroki, c/o Shin-Etsu Chemical Co., Ltd, Annaka-shi, Gunma-ken (JP); Kobayashi, Toshimi, c/o Shin-Etsu Chemical Co. Ltd, Annaka-shi, Gunma-ken (JP)
(74) Representative: Fuchs, Luderschmidt & Partner Patentanwälte

(57) **Abstract**

An improvement is proposed in the method for the preparation of a magneto-optical recording medium comprising a transparent plastic substrate and a first dielectric layer of silicon nitride and a recording layer successively formed on the substrate surface by the sputtering method, according to which the bonding strength between the substrate surface and the first dielectric layer can be adequately controlled in the range from 50 to 400 g/cm so that the bit-error rate can be remarkably decreased in the recording medium which also has excellent mechanical properties such as a decreased tilt. The improvement can be obtained, in the sputtering deposition of the first dielectric layer, by keeping the distance between the target and the substrate surface in the range from 30 mm to 75 mm and controlling the deposition rate of silicon nitride on to the substrate surface to form the first dielectric layer in the range from 1 nm/second to 15 nm/second.

## Description

### BACKGROUND OF THE INVENTION

The present invention relates to a magneto-optical recording medium and a method for the preparation thereof.

Magneto-optical recording media generally have a layered structure consisting of a transparent substrate made from a plastic resin such as polycarbonate and thin layers formed thereon including successively a first dielectric layer, recording layer, second dielectric layer and reflecting layer. Each of these layers is formed conventionally by the method of DC or RF sputtering. The most conventional material for the first and second dielectric layers is silicon nitride SiN and the layer of silicon nitride is formed by the sputtering method using a target of silicon nitride or by the reactive sputtering method using elementary silicon as the target in an atmosphere containing nitrogen.

Needless to say, it is important that the bonding strength between the layers is adequately large and various proposals have been made heretofore with an object to obtain a good bonding strength between layers. For example, Japanese Patent Kokai 3-268249 proposes a pre-treatment of the plastic substrate before formation of the first dielectric layer thereon by conducting inverse sputtering or ion-beam bombardment so that the surface of the plastic substrate is provided with a microscopically adequate ruggedness to exhibit an anchoring effect to the dielectric layer formed thereon with an increased bonding strength. Alternatively, it is known that the bonding strength between the substrate surface and the first dielectric layer formed thereon can be improved when the substrate surface is subjected to a pre-treatment with oxygen plasma so as to form an oxidized layer to serve as an intermediate layer interposed between the substrate surface and the dielectric layer. A further alternative method is to subject a substrate after formation of the first dielectric layer thereon to a heat treatment so that diffusion takes place between the substrate surface and the dielectric layer formed thereon resulting in enhancement of the bonding strength therebetween.

These prior art methods, however, are not always industrially practicable because the method can be practiced only by the use of a complicated apparatus and the increase in the number of steps naturally causes a decrease in the productivity. Further, Japanese Patent Kokai 3-268249 teaches that an increase in the bonding strength between layers has an effect to decrease the bit-error rate, referred to as BER hereinafter, in the durability test of the recording medium but certain measures such as ion-beam bombardment and the like must be undertaken in order to increase the bonding strength between layers. Another important requirement in the above described methods is that the bonding strength between layers is not too high because warping of the substrate is sometimes caused by an excessively high bonding strength between layers resulting in a decrease in the mechanical properties of the magneto-optical recording medium such as the flatness of recording medium represented by the value of the so-called "tilt" and the like.

### SUMMARY OF THE INVENTION

The present invention accordingly has an object to provide a novel and improved magneto-optical recording medium having an adequate bonding strength between layers still without problems relative to the mechanical properties such as tilt and the like as well as a method for the preparation of such an improved magneto-optical recording medium.

Thus, the present invention provides an improvement, in a method for the preparation of a magneto-optical recording medium comprising a transparent substrate made from a plastic resin and a first dielectric layer of silicon nitride and a recording layer successively formed on one surface of the substrate each by the method of sputtering performed in a vacuum chamber with a target for the respective layers oppositely facing the substrate surface, which comprises keeping the distance between the target and the substrate surface in the range from 30 mm to 75 mm and controlling the rate of deposition of silicon nitride on to the substrate surface to form the first dielectric layer in the range from 1 nm/second to 15 nm/second.

The magneto-optical recording medium prepared by the above defined inventive method is characterized by a specific bonding strength between the substrate surface and the first dielectric layer of silicon nitride which is in the range from 50 g/cm to 400 g/cm as determined by the tape peeling test.

### BRIEF DESCRIPTION OF THE DRAWING

Figures 1a to 1d are each a schematic illustration of the procedure of the tape peeling test.

Figure 2 is a graph showing the BER of the magneto-optical recording media prepared in the Examples and Comparative Examples as a function of running time.

Figure 3 is a graph showing the tilt in the magneto-optical recording media as a function of the bonding strength between layers.

### DETAILED DESCRIPTION OF THE PREFERRED EMBODIMENTS

As is described above, the improvement of the present invention in the method for the preparation of a magneto-optical recording medium is characterized by the unique conditions in the film-formation of the first dielectric layer of silicon nitride on the substrate surface by the sputtering method in a vacuum chamber including the limited distance between the target of sputtering and the substrate surface and the rate of deposition of the silicon nitride film on to the substrate surface.

The improvement of the invention relative to the bonding strength between layers can be obtained in any types of magneto-optical recording media provided that the recording medium has a first dielectric layer of silicon nitride formed on the surface of a substrate made from a transparent plastic resin and a recording layer formed on the first dielectric layer, these two layers being formed in a vacuum chamber for sputtering by holding a target for the respective layers to oppositely face the substrate surface.

Namely, the distance between the surface of a substrate made from a transparent plastic resin such as polycarbonate and the target in the sputtering deposition of the first dielectric layer of silicon nitride is kept in the range from 30 mm to 75 mm. When the distance is too small, stable electric discharge to cause sputtering cannot be obtained in the sputtering chamber while, when the distance is too large, the deposition rate of silicon nitride to form the first dielectric layer is unduly decreased not to give an adequate bonding strength between the substrate surface and the first dielectric layer of silicon nitride. The deposition rate of silicon nitride in the sputtering to form the first dielectric layer is also an important factor to affect the bonding strength between the substrate surface and the silicon nitride layer and the rate must be controlled to be in the range from 1 nm/second to 15 nm/second. When the deposition rate is too low, the bonding strength between the substrate surface and the silicon nitride layer cannot be adequately high while, when the deposition rate is too high, the bonding strength would be too high so that troubles due to warping of the substrate would be caused.

The above described method according to the invention is so effective that the troublesome and expensive pre-treatment of the plastic substrate can be omitted. Namely, an adequate bonding strength between the substrate surface and the first dielectric layer of silicon nitride can be obtained even by omitting the ion-beam bombardment treatment by which the substrate surface can be imparted with adequate ruggedness and the oxygen plasma pre-treatment to form an intermediate oxidized layer between the substrate surface and the silicon nitride layer.

When the step of sputtering for the deposition of silicon nitride to form the first dielectric layer is performed according to the above described inventive method, an adequate bonding strength, which is in the range from 50 g/cm to 400 g/cm by the tape peeling test, can be obtained between the substrate surface and the first dielectric layer of silicon nitride. When the bonding strength is too small between the substrate surface and the first dielectric layer of silicon nitride, troubles are sometimes caused due to exfoliation of the dielectric layer from the substrate surface during use of the magneto-optical recording medium while, when the bonding strength is too large, a degradation is caused in the mechanical properties of the recording medium with an increased tilt due to warping of the substrate. A magneto-optical recording medium prepared to satisfy the above described requirements exhibits an outstandingly small BER in the durability test and is excellent in the mechanical properties including tilt which is a consequence of warping of the substrate.

In the following, some embodiments of the present invention are described in more detail by way of examples, which, however, never limit the scope of the invention in any way.

In the Examples and Comparative Examples described below, the magneto-optical recording medium prepared therein was evaluated for the items given below by the testing procedures described there.

### 1. Bonding strength between the substrate surface and layers

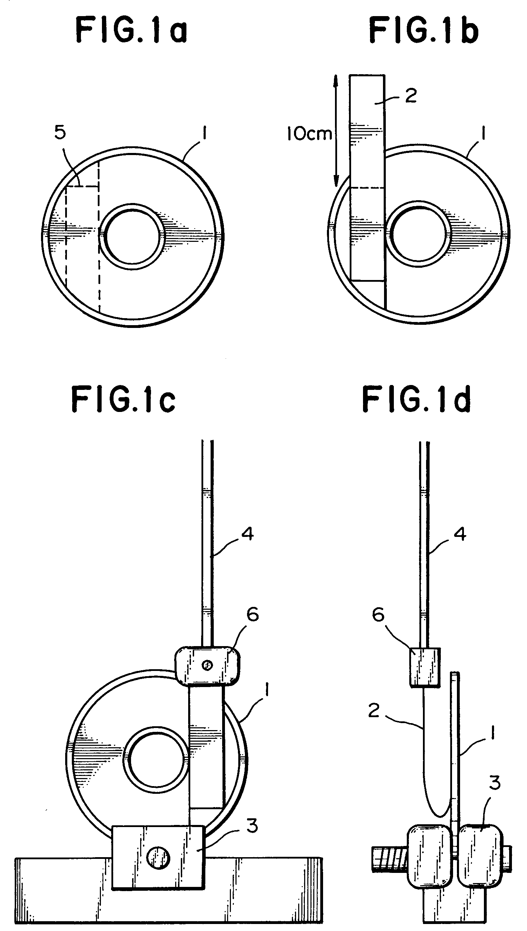

Incision lines 5 were made, as is illustrated in Figure 1a which shows the magneto-optical recording medium 1, into the layers formed on the substrate surface by using a razor blade to such a depth as to reach the substrate. The distance between two parallel incision lines 5 was 1.8 cm. A pressure-sensitive adhesive tape 2 having a width of 1.8 cm was applied and bonded to the surface of the layers exactly on the area between the two parallel incision lines 5 carefully not to leave any lifted portions of the tape 2 by incomplete adhesion. The adhesive tape 2 was so long that a 10 cm long extraneous portion extended from the 1.8 cm long incision line perpendicular to the two parallel incision lines 5 as is illustrated in Figure 1b. A clip 6 is fastened to the free end of the adhesive tape 2. After forcible incipient peeling of the layers at the end portion of the area surrounded by the incision lines 5 in order to ensure smooth proceeding of peeling by repeating reciprocal pulling of the tape end back and forth, the recording medium 1 was fixed to a holder 3 and the clip 6 was connected to the pulling rod 4 of an automatic tensile testing machine as is illustrated in Figure 1c and the adhesive tape 2 was pulled as is illustrated in Figure 1d in a direction of 180° angle at a constant pulling velocity of 30 cm/minute to record the force required for peeling of the layers from the substrate surface.

### 2. Durability

Measurement of the BER was performed for up to 2000 hours of running at an ambient temperature of 80 °C in an atmosphere of 90% relative humidity by using an apparatus for assessment of magneto-optical recording discs (Model EXPERT EOM-501S). BER is the proportion of the number of error bytes to the total number of the bytes on the whole recording medium. 3. Tilt

Measurement of tilt was performed according to JIS X 6272-1992, 9.4.9, by using an instrument for the measurement of mechanical properties of magneto-optical recording discs (Model LM-100A, manufactured by Ono Sokki Co.).

### Example 1.

A substrate disc of polycarbonate resin having a thickness of 1.2 mm and a diameter of 80 mm and provided with a tracking groove was mounted on a disc carrier and set in a sputtering chamber suitable for successive formation of the first dielectric layer, recording layer, second dielectric layer and reflecting layer each by the DC or RF sputtering method without breaking the vacuum. The distance between the substrate surface and the oppositely facing target was 45 mm. After evacuation of the chamber to vacuum, a first dielectric layer of silicon nitride having a thickness of 35 nm was formed on the substrate surface using a target of silicon nitride under a pressure of 8.5 mTorr with an electric power output of 1.10 E-02 kW/cm². The rate of silicon nitride deposition to form the dielectric layer was 5.1 nm/second.

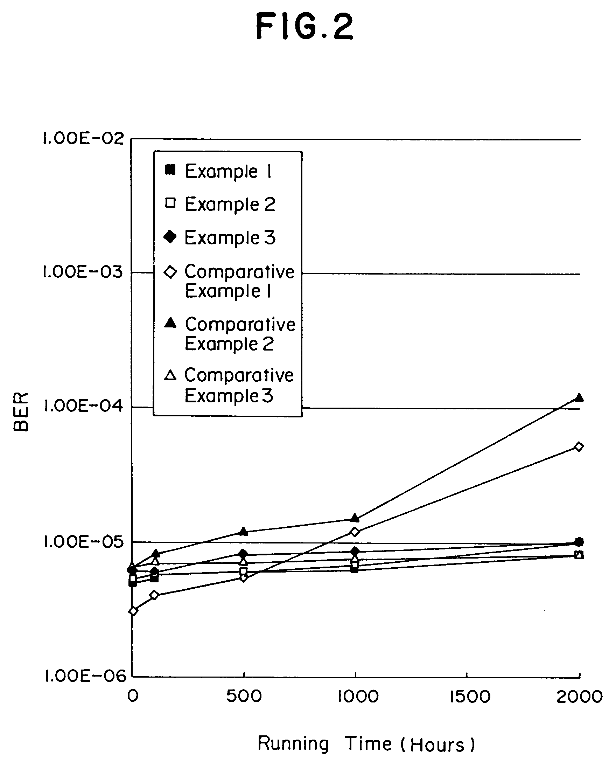

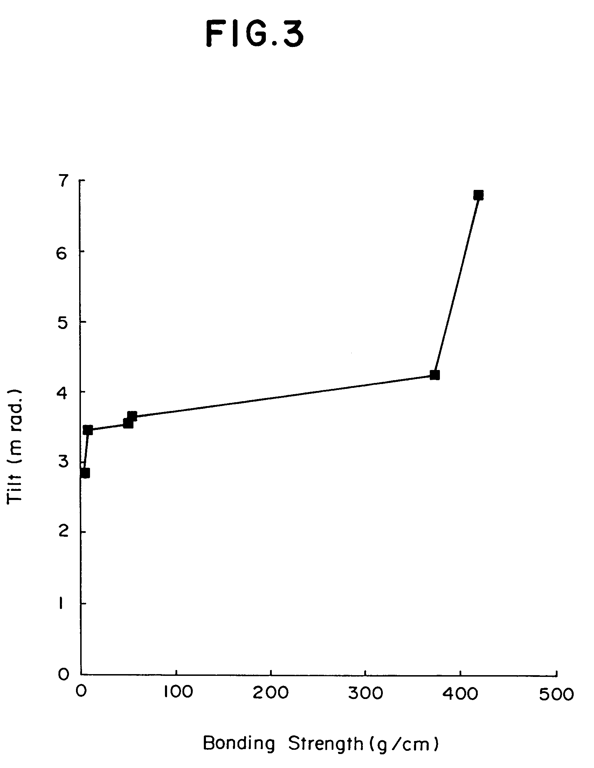

Thereafter, a recording layer of a Tb-Fe-Co alloy having a thickness of 13 nm, a second dielectric layer of silicon nitride having a thickness of 30 nm and a reflecting layer of aluminum having a thickness of 60 nm were successively formed thereon. The pressures in the sputtering chamber in the formation of these three layers were 6.8, 8.5 and 10 mTorr, respectively, and the electric power outputs were 2.75 E-02, 1.10 E-02 and 1.10 E-02 kW/cm², respectively, relative to the surface area of the target. Finally, an overcoat layer of about 10 µm thickness was formed on the surface of the thus sputtering-formed layers by applying Daicure Clear (a product by Dai-nippon Ink Chemical Co.) to complete a magneto-optical recording medium, of which the evaluation tests were undertaken according to the testing procedures described above. The bonding strength between layers was 53 g/cm and the result of the measurement of BER is shown in Figure 2 up to 2000 hours of the running time. Figure 3 is a graph obtained by plotting the tilt in mradian as a function of the bonding strength which is 53 g/cm in this example.

### Example 2.

The procedure for the preparation of the magneto-optical recording medium was substantially the same as in Example 1 except that the distance between the substrate surface and the target was 75 mm and the rate of silicon nitride film deposition for the first dielectric layer was 1.2 nm/second. The pressures in the sputtering chamber and the electric power outputs for the film-formation of the first dielectric layer, recording layer, second dielectric layer and reflecting layer were 10, 5, 10 and 10 mTorr, respectively, and 5.49 E-03, 2.75 E-03, 5.49 E-03 and 1.10 E-02 kW/cm², respectively.

The bonding strength between layers was 51 g/cm and the result of the measurement of BER is shown in Figure 2 up to 2000 hours of the running time. Figure 3 is a graph obtained by plotting the tilt in mradian as a function of the bonding strength which is 51 g/cm in this example.

### Example 3.

The procedure for the preparation of a magneto-optical recording medium was substantially the same as in Example 1 except that the first and second dielectric layers were formed by the reactive sputtering method using a silicon target, the distance between the substrate surface and the target was 40 mm and the reflecting layer having a thickness of 100 nm instead of 60 nm was formed from an alloy of 97% aluminum and 3% titanium. The rate of silicon nitride film deposition for the first dielectric layer was 14 nm/second. The pressures in the sputtering chamber and the electric power outputs for the film-formation of the first dielectric layer, recording layer, second dielectric layer and reflecting layer were 10, 5, 10 and 10 mTorr, respectively, and 3.30 E-02, 8.24 E-03, 3.30 E-02 and 1.10 E-02 kW/cm², respectively.

The bonding strength between layers was 375 g/cm and the result of the measurement of BER is shown in Figure 2 up to 2000 hours of the running time. Figure 3 is a graph obtained by plotting the tilt in mradian as a function of the bonding strength which is 375 g/cm in this example.

### Comparative Example 1.

The procedure for the preparation of a magneto-optical recording medium was substantially the same as in Example 3 except that the distance between the substrate surface and the target was 115 mm, the first dielectric layer of silicon nitride had a thickness of 40 nm instead of 35 nm and the reflecting layer made from an alloy of 98.5% aluminum and 1.5% titanium had a thickness of 60 nm instead of 100 nm. The rate of silicon nitride film deposition for the first dielectric layer was 0.3 nm/second. The pressures in the sputtering chamber for the film-formation of the first dielectric layer, recording layer, second dielectric layer and reflecting layer were 10, 5, 10 and 10 mTorr, respectively, and the electric power output was 1.10 E-02 kW/cm² for each of these four layers.

The bonding strength between layers was 3.9 g/cm and the result of the measurement of BER is shown in Figure 2 up to 2000 hours of the running time. Figure 3 is a graph obtained by plotting the tilt in mradian as a function of the bonding strength which is 3.9 g/cm in this comparative example.

### Comparative Example 2.

The procedure for the preparation of a magneto-optical recording medium was substantially the same as in Comparative Example 1 except that the first dielectric layer of silicon nitride and the recording layer had a thickness of 80 nm instead of 35 nm and 25 nm instead of 13 nm, respectively. The rate of silicon nitride film deposition for the first dielectric layer was 0.3 nm/second. The pressures in the sputtering chamber and the electric power outputs for the film-formation of the first dielectric layer, recording layer, second dielectric layer and reflecting layer were 10, 1.5, 10 and 10 mTorr, respectively, and 1.92 E-02, 8.24 E-03, 1.92 E-02 and 1.10 E-02 kW/cm², respectively.

The bonding strength between layers was 6.4 g/cm and the result of the measurement of BER is shown in Figure 2 up to 2000 hours of the running time. Figure 3 is a graph obtained by plotting the tilt in mradian as a function of the bonding strength which is 6.4 g/cm in this comparative example.

### Comparative Example 3.

The procedure for the preparation of a magneto-optical recording medium was substantially the same as in Example 3 except that the distance between the substrate surface and the target was 35 mm instead of 40 mm so that the deposition rate of silicon nitride film for the formation of the first dielectric layer was 15.5 nm/second.

The bonding strength between layers was 420 g/cm and the result of the measurement of BER is shown in Figure 2 up to 2000 hours of the running time. Figure 3 is a graph obtained by plotting the tilt in mradian as a function of the bonding strength which is 420 g/cm in this comparative example. As is understood from these Figures, the BER characteristic in this experiment was as good as in Examples 1 to 3 as is shown in Figure 2 but the magnetic recording medium is not practical because of the outstandingly large tilt as is shown in Figure 3.

## Claims

1. In a method for the preparation of a magneto-optical recording medium comprising a transparent substrate made from a plastic resin and a first dielectric layer of silicon nitride and a recording layer successively formed on one surface of the substrate by the method of sputtering performed in a vacuum chamber with a target oppositely facing the substrate surface, the improvement which comprises keeping the distance between the target and the substrate surface in the range from 30 mm to 75 mm and controlling the rate of deposition of silicon nitride on to the substrate surface to form the first dielectric layer in the range from 1 nm/second to 15 nm/second.

2. A magneto-optical recording medium comprising a transparent substrate made from a plastic resin and a first dielectric layer of silicon nitride and a recording layer successively formed on one surface of the substrate in which the bonding strength between the substrate surface and the first dielectric layer of silicon nitride is in the range from 50 g/cm to 400 g/cm by the tape peeling test, the first dielectric layer of silicon nitride being formed by the sputtering method performed in a vacuum chamber with a target oppositely facing the substrate surface by keeping the distance between the target and the substrate surface in the range from 30 mm to 75 mm and controlling the rate of deposition of silicon nitride on to the substrate surface to form the first dielectric layer in the range from 1 nm/second to 15 nm/second.
